# EUROPÄISCHE PATENTSCHRIFT

(11) **EP 0 685 359 B1**
(45) Veröffentlichungstag und Bekanntmachung des Hinweises auf die Patenterteilung: **04.08.1999**
(21) Anmeldenummer: 95105847.8
(22) Anmeldetag: 19.04.1995
(51) Int. Cl.: B60N 3/02

(54) **Klappgriff**
Tiltable hand grip
Poignée de maintien basculable

(30) Priorität: 02.05.1994 DE 9407276 U
(43) Veröffentlichungstag der Anmeldung: 06.12.1995
(73) Patentinhaber: Utescheny - Endos GmbH, D-75059 Zaisenhausen (DE)
(72) Erfinder: Engel, Klaus, D-74889 Sinsheim-Dühren (DE)
(74) Vertreter: Clemens, Gerhard, Dr.-Ing.

(56) Entgegenhaltungen:
- EP-A- 0 346 156
- DE-A- 3 245 927
- DE-U- 9 206 175
- DE-U- 9 407 276

## Beschreibung

### TECHNISCHES GEBIET

Die vorliegende Erfindung betrifft einen Klappgriff mit einem Griffbügel, der an einer Montagewand, insbesondere eines Fahrzeugs, mittels eines an Befestigungsmitteln montierbaren Lagerbocks schwenkbar angelenkt ist und gegen die Kraftwirkung einer Rückstellfeder aus einer an den Lagerbock angelehnten Ruhestellung in eine Funktionsstellung abschwenkbar ist, wobei eine Halteeinrichtung vorhanden ist, die den Griffbügel bei nicht montiertem Klappgriff entgegen der Wirkung der Rückstellfeder in einer Sperrstellung hält, so daß die Befestigungsmittel zugänglich sind.

Derartige Klappgriffe werden häufig im Automobilbau im Innenraum eines Fahrzeuges montiert.

### STAND DER TECHNIK

Bei den bekannten Klappgriffen der eingangs genannten Art muß bei der Montage der Griffbügel manuell vom Lagerbock weggeklappt werden, damit die darunter liegenden Befestigungsmittel zugänglich sind und der Griff an die Montagewand angeschraubt werden kann.

In dem DE-U-92 06 175.2 ist ein Klappgriff der eingangs genannten Art beschrieben. Hierbei ist ein Deckel als Klappdeckel ausgebildet, und zwar schwenkbar um eine Achse parallel zur Schwenkachse des Griffbügels und in die gleiche Richtung wie der Griffbügel. Am Griffbügel ist eine Hinterschnittnase für den Deckel vorgesehen, in die der zugehörige aufgeschwenkte Klappdeckel bei etwa in Funktionsstellung befindlichem Griffbügel hinterfassend eingreifen kann. Dadurch wird der Griffbügel gegen die Kraftwirkung seiner Rückstellfeder in seiner Montagestellung arretiert.

### DARSTELLUNG DER ERFINDUNG

Ausgehend von dem genannten Stand der Technik liegt der vorliegenden Erfindung die Aufgabe bzw. das technische Problem zugrunde, einen Klappgriff anzugeben, der auf wirtschaftliche, einfache und technisch präzise Art und Weise herstellbar ist, eine vereinfachte und schnelle fabrikmäßige Fertigmontage ermöglicht und ein optisch günstiges Aussehen gewährleistet.

Der erfindungsgemäßige Klappgriff ist durch die Merkmale des Anspruchs 1 gegeben. Vorteilhafte Ausgestaltungen und Weiterbildungen sind Gegenstand der Unteransprüche.

Der erfindungsgemäße Klappgriff der eingangs genannten Art zeichnet sich demgemäß dadurch aus, daß die Halteeinrichtung während oder nach der Montage automatisch entsperrbar ausgebildet ist, die Halteeinrichtung so angeordnet ist, daß während der Montage die Befestigungsmittel indirekt oder direkt auf die Halteeinrichtung einwirken, so daß sie eine Drehung um einen vorgegebenen Winkel während der Montage ausführt, und die Halteeinrichtung einen Vorsprung aufweist, der mit einem an einer in der Bohrung für das Befestigungsmittel verschiebbar angeordneten Buchse angeformten Vorsprung bei nicht montiertem Klappgriff in Kontakt steht, und diese Buchse durch den Befestigungsvorgang axial verschoben wird, wodurch sich die Halteeinrichtung um den vorgegebenen Winkel verdreht.

Dadurch, daß der Griffbügel vor der Montage durch die Halteeinrichtung in Funktionsstellung gehalten wird, sind die Aufnahmeöffnungen der Befestigungsmittel problemlos zugänglich. Während der Montage muß nicht zusätzlich der Griffbügel entgegen der Wirkung der Rückstellfeder in offener oder in Funktionsstellung gehalten werden. Dadurch vereinfacht sich die Montage erheblich. Insbesondere für Überkopfmontage bedeutet dies eine wesentliche Vereinfachung.

In einer bevorzugten Ausgestaltung, die eine einfache Konstruktion, ist die Halteeinrichtung drehbar gelagert, wobei bevorzugt die Drehachse der Halteeinrichtung im wesentlichen parallel zur Drehachse des Griffbügels angeordnet ist.

Eine hinsichtlich der Herstellung besonders einfache und hinsichtlich der Zuverlässigkeit besonders bevorzugte Ausführungsvariante zeichnet sich dadurch aus, daß die Halteeinrichtung an Lagerzapfen mit Klemmpassung gelagert ist. Die Klemmpassung ist dabei so ausgebildet, daß sie Klemmkräfte erzeugt, die die Halteeinrichtung entgegen der Wirkung ihres Eigengewichts in ihrer Lage halten. Der Griffbügel wird zunächst problemlos durch die Halteeinrichtung über einen formschlüssigen Anschlag in Funktionsstellung gehalten und kann in dieser Funktionsstellung mit problemlos zugänglichen Befestigungsmitteln montiert werden. In Ruheposition, d.h. bei eingeklapptem Griffbügel verdeckt dieser die Aufnahmeöffnungen für die Befestigungsmittel.

Bevorzugt ist die Halteeinrichtung so ausgebildet, daß sie zumindest bereichsweise durch Drehung des Griffbügels verdreht werden kann, nachdem eine Entsperrung durch die Haltevorrichtung erfolgt ist.

Eine konstruktiv besonders einfache Lösung zeichnet sich dadurch aus, daß die Befestigungsmittel als Schraube ausgebildet sind und die Schraube durch ihre axiale Verschiebung beim Befestigungsvorgang zumindest teilweise auf die Halteeinrichtung direkt, bevorzugt über den Schraubenkopf, oder indirekt einwirkt.

Eine besonders bevorzugte Ausführungsform des erfindungsgemäßen Klappgriffes zeichnet sich dadurch aus, daß die Halteeinrichtung als Abdeckeinrichtung für die Aufnahmebohrung des Befestigungsmittels ausgebildet ist, die nach der Montage des Klappgriffes in ihre Aodeckposition bringbar ist. Diese Doppelfunktion der Halteeinrichtung, nämlich einerseits zunächst den Griffbügel in Funktionsstellung (offenstellung) zu halten und andererseits nach Abschluß der Montage die Aufnahmebohrung für das Befestigungsmittel abzudecken ist besonders wirtschaftlich hinsichtlich einer vereinfachten und rationellen Endmontage.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Es zeigen:

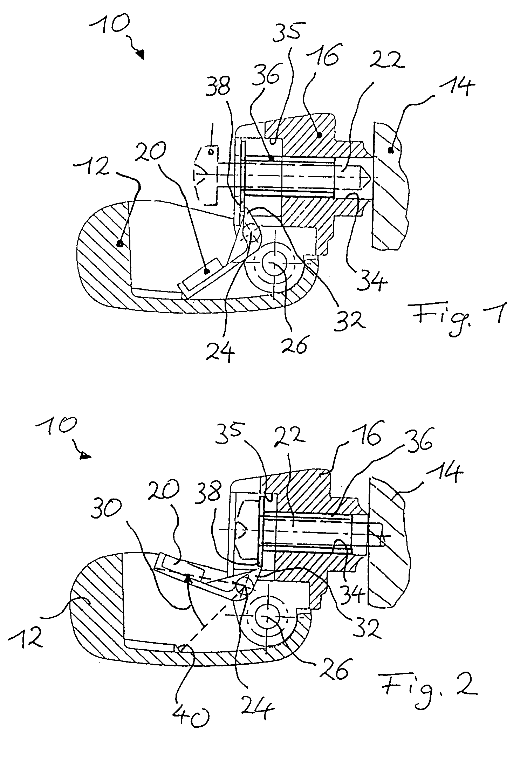

- Fig. 1 bis 4: Schematischer Querschnitt durch einen erfindungsgemäßen Klappgriff während einzelner Stadien des Montagevorgangs.

### WEGE ZUM AUSFÜHREN DER ERFINDUNG

Ein Klappgriff 10 weist einen drehbar um eine Drehachse 26 angeordneten Griffbügel 12 auf. Die Drehachsenlagerung ist an einen Lagerbock 16 angeformt, der einen Stufenbohrung mit einem ersten Bereich 35 mit vergrößertem Durchmesser und einem zweiten Bereich 34 mit verkleinertem Durchmesser aufweist. In die Stufenbohrung 34, 35 kann ein als Schraube 22 ausgebildetes Befestigungsmittel eingeführt werden, damit der Lagerbock 16 und damit der gesamte Griff 10 an einer Montagewand 14 befestigt werden kann.

An dem Lagerbock 16 ist ein als Halteeinrichtung 20 bezeichnetes, im wesentlichen im Querschnitt L-förmiges Formteil um eine Drehachse 24 drehbar gelagert. Die Drehachse 24 verläuft im wesentlichen parallel zur Drehachse 26. Die Drehachse 24 ist im Bereich des kleineren Schenkels des L-förmigen Querschnitts der Halteeinrichtung 20 vorhanden. Die Lagerung der Halteeinrichtung 20 erfolgt an nicht näher dargestellten Lagerzapfen, wobei die Halteeinrichtung 20 in Klemmpassung auf den Lagerzapfen sitzt.

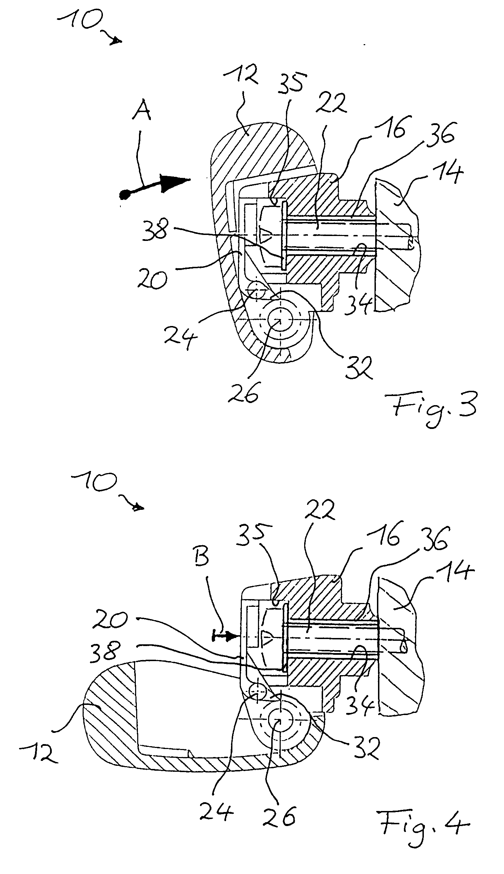

Der Griffbügel 12 ist von einer Ruhestellung (siehe Fig. 3) in eine Funktionsstellung (siehe Fig. 1) um die Drehachse 26 drehbar. Auf den Griffbügel 12 wirkt eine in den Figuren nicht dargestellte Rückstellfeder ein, die bei montiertem Klappgriff 10 den Griffbügel in Ruhestellung drückt. Bei Benutzung wird der Klappgriff 10 entgegen der Wirkung dieser Rückstellfeder umgeschwenkt.

Die klemmpassgelagerte Halteeinrichtung 20 ist nun vor der Montage des Klappgriffes 10 so angeordnet, daß sie auf einen an der Innenseite des Klappgriffes 10 vorhandenen Anschlag 40 formschlüssig anliegt und den Griffbügel in Funktionsstellung hält (siehe Fig. 1). Ein derartig anfänglich gesperrte Klappgriff wird von der Montageperson montiert.

In der Stufenbohrung 34, 35 ist eine Buchse 36 mit Vorsprung 38 axial verschieblich gelagert, auf die die Befestigungsschraube 22 beim Montagevorgang verschiebend einwirkt. Der Vorsprung 38 der Buchse 36 ist im dargestellten Ausführungsbeispiel als umlaufender Kragen ausgebildet. Dieser steht mit einem Vorsprung 32 der Halteeinrichtung 20 in Anlagekontakt, welcher Vorsprung 32 durch den kürzeren Schenkel des L-förmigen Querschnittes der Halteeinrichtung 20 gebildet wird.

Wird nun die Schraube 22 zu Befestigungszwecken eingedreht, so verschiebt sich dieselbe in axialer Richtung und damit auch die Buchse 36. Durch diesen Verschiebevorgang (Fig. 1 nach Fig. 2) löst sich die Halteeinrichtung 20 aus dem Anschlag 40 und wird um ihre Drehachse 24 um einen vorgebbaren Winkel 30 verdreht. Die an den Lagerzapfen auftretenden Klemmkräfte sind größer als die Kraftkomponenten des Eigengewichts der Halteeinrichtung (20). In dieser Position (Fig. 2) wird somit ein Zurückfallen der Halteeinrichtung in ihre Ausgangsposition infolge des Eigengewichts verhindert. Auch ist in dieser Position die Stufenbohrung 34, 35 von außen her zugänglich. Der Griffbügel wird manuell entgegen der Wirkung der Rückstellfederkraft in seiner Funktionsposition gehalten.

Aus Gründen der Übersichtlichkeit ist in Fig. 2 der Griffbügel in seiner Funktionsstellung dargestellt. Nach Fig. 2 wird nunmehr die Befestigungsschraube 22 weiter in die Montagewand 14 eingedreht, wobei der Vorsprung 38 der Buchse 36 mit dem Vorsprung 32 der Halteeinrichtung 20 außer Eingriff kommt. Sobald nun die Befestigungsschraube 22 vollständig eingedreht ist und damit der Klappgriff 10 als solcher an der Montagewand 14 befestigt ist, wird nun der Griffbügel 12 gemäß Fig. 3 in Pfeilrichtung A um seine Drehachse 26 gedreht bzw. verdreht sich automatisch infolge der Federkraft, wobei er die Halteeinrichtung 20 mitnimmt, bis diese den Bereich 35 der Stufenbohrung mit vergrößertem Durchmesser abdeckt, da die Halteeinrichtung 20 gleichzeitig als Abdeckeinrichtung derart ausgebildet ist, daß sie die Öffnung der Bohrung 35 verschließt.

Gemäß Fig. 4 wird durch ein kurzes Andrücken der Halteeinrichtung 20 - dargestellt durch den Pfeil B - die Halteeinrichtung in die Bohrung 35 eingeklipst. Somit ist das Befestigungsmittel von außen nicht mehr sichtbar, was in vielen Fällen gewünscht wird, da dies ein ansprechendes äußeres Aussehen zur Folge hat. Die Halteeinrichtung 20 ist lösbar in die Bohrung 35 eingeklipst, so daß eine Demontage des Klappgriffes problemlos möglich ist.

Als Material für einen Klappgriff wird bevorzugt Kunststoff eingesetzt.

Ein großer Vorteil des erfindungsgemäßen Klappgriffes besteht darin, daß zur Montage der Griffbügel sich in offener Funktionsstellung befindet. Durch das Anschrauben der Befestigungsmittel wird der formschlüssige Anschlag vom Griffbügel gelöst, wobei in diesem Zustand die Montageperson den Griffbügel in Funktionsstellung hält. Nachdem das Befestigungsmittel vollständig befestigt ist, läßt die Montageperson den Griffbügel los, welcher daraufhin aufgrund der Kraft der Rückstellfeder in seine Ruheposition schwenkt und die Halteeinrichtung in Richtung auf die Bohrung um ihre Drehachse verdreht. Da die Halteeinrichtung ebenso als Abdeckkappe ausgebildet ist, wird in diesem Zustand die Bohrung für das Befestigungsmittel bereits abgedeckt. Durch manuellen Andruck auf die Halteeinrichtung wird diese schließlich in die Bohrung eingeklipst. In der Regel muß dieses Vorgehen an zwei Lagerböcken durchgeführt werden, da die Haltegriffe üblicherweise zwei Lagerböcke aufweisen.

## Patentansprüche

1. Klappgriff (10) mit einem Griffbügel (12), der an einer Montagewand (14), insbesondere eines Fahrzeugs, mittels eines an Befestigungsmitteln (22) montierbaren Lagerbocks (16) schwenkbar angelenkt ist und gegen die Kraftwirkung einer Rückstellfeder aus einer an den Lagerbock (16) angelehnten Ruhestellung in eine Funktionsstellung abschwenkbar ist, wobei eine Halteeinrichtung (20) vorhanden ist, die den Griffbügel (12) bei nicht montiertem Klappgriff (10) entgegen der Wirkung der Rückstellfeder in einer Sperrstellung hält, so daß die Befestigungsmittel (22) zugänglich sind,
**dadurch gekennzeichnet,** daß
- die Halteeinrichtung (20) während der Montage automatisch entsperrbar ausgebildet ist,
- die Halteeinrichtung (20) so angeordnet ist, daß während der Montage die Befestigungsmittel (22) indirekt oder direkt auf die Halteeinrichtung (20) einwirken, so daß sie (20) eine Drehung um einen vorgegebenen Winkel (30) während der Montage ausführt, und
- die Halteeinrichtung (20) einen Vorsprung (32) aufweist, der mit einem an einer in der Bohrung (34) für das Befestigungsmittel (22) verschiebbar angeordneten Buchse (36) angeformten Vorsprung (38) bei nicht montiertem Klappgriff in Kontakt steht, und diese Buchse (36) durch den Befestigungsvorgang axial verschoben wird, wodurch sich die Halteeinrichtung (20) um den vorgegebenen Winkel (30) verdreht.

2. Klappgriff nach Anspruch 1,
**dadurch gekennzeichnet**, daß die Halteeinrichtung (20) drehbar gelagert ist.

3. Klappgriff nach Anspruch 1 und/oder 2,
**dadurch gekennzeichnet,** daß die Drehachse (24) der Halteeinrichtung (20) im wesentlichen parallel zur Drehachse (26) des Griffbügels (12) angeordnet ist.

4. Klappgriff nach einem oder mehreren der vorstehenden Ansprüche,
**dadurch gekennzeichnet,** daß die Halteeinrichtung (20) an Lagerzapfen mit Klemmpassung gelagert ist.

5. Klappgriff nach einem oder mehreren der vorstehenden Ansprüche,
**dadurch gekennzeichnet,** daß die Halteeinrichtung (20) so ausgebildet ist, daß sie zumindest bereichsweise durch Drehung des Griffbügels (12) verdreht werden kann, nachdem die Halteeinrichtung den Griffbügel freigegeben hat.

6. Klappgriff nach Anspruch 1,
**dadurch gekennzeichnet,** daß die Befestigungsmittel als Schraube (22) ausgebildet sind und die Schraube durch ihre axiale Verschiebung beim Befestigungsvorgang zumindest teilweise auf die Halteeinrichtung (20) direkt bevorzugt über den Schraubenkopf oder indirekt einwirkt.

7. Klappgriff nach einem oder mehreren der vorstehenden Ansprüche,
**dadurch gekennzeichnet,** daß die Halteeinrichtung (20) als Abdeckeinrichtung für die Aufnahmebohrung (35) für das Befestigungsmittel (22) ausgebildet ist, die nach der Montage des Klappgriffs in ihre Abdeckposition bringbar ist.

8. Klappgriff nach einem oder mehreren der vorstehenden Ansprüche,
**dadurch gekennzeichnet,** daß der Klappgriff (10) einen bevorzugt formschlüssigen Anschlag (40) für die Halteeinrichtung (20) aufweist, welcher sich bevorzugt an der Innenseite des Griffbügels befindet.

## Claims

1. Tiltable hand grip (10) with a grip bracket (12) which is articulated on an installation wall (14), in particular of a vehicle, in a pivotable manner by means of a bearing block (16), installable on fastening means (22), and which can be pivoted downwards, counter to the action of a restoring spring, out of a rest position, in which it rests against the bearing block (16), into a functional position, it being the case that there is a retaining device (20), which, before the tiltable hand grip (10) has been installed, retains the grip bracket (12), counter to the action of the restoring spring, in a blocked position, with the result that the fastening means (22) are accessible, characterized in that
- the retaining device (20) is designed such that it can be released automatically during the installation,
- the retaining device (20) is arranged such that, during the installation, the fastening means (22) act directly or indirectly on the retaining device (20), with the result that said retaining device (20) performs a rotation through a predetermined angle (30) during the installation, and
- the retaining device (20) has a protrusion (32) which, before the tiltable hand grip has been installed, is in contact with a protrusion (38) integrally formed on a bushing (36) which is arranged displaceably in the bore (34) for the fastening means (22), and said bushing (36) is displaced axially by the fastening operation, as a result of which the retaining device (20) rotates through the predetermined angle (30).

2. Tiltable hand grip according to Claim 1, characterized in that the retaining device (20) is mounted rotatably.

3. Tiltable hand grip according to Claim 1 and/or 2, characterized in that the pivot pin (24) of the retaining device (20) is arranged essentially parallel to the pivot pin (26) of the grip bracket (12).

4. Tiltable hand grip according to one or more of the preceding claims, characterized in that the retaining device (20) is mounted on bearing journals with a clamp fit.

5. Tiltable hand grip according to one or more of the preceding claims, characterized in that the retaining device (20) is designed such that, at least in certain areas, it can be rotated by rotation of the grip bracket (12) once the retaining device has released the grip bracket.

6. Tiltable hand grip according to Claim 1, characterized in that the fastening means are designed as a screw (22), and, by way of its axial displacement during the fastening operation, the screw acts directly, preferably via the screw head, or indirectly on the retaining device (20), at least in part.

7. Tiltable hand grip according to one or more of the preceding claims, characterized in that the retaining device (20) is designed as a covering device for the receiving bore (35) for the fastening means (22), it being possible for said covering device to be brought into its covering position once the tiltable hand grip has been installed.

8. Tiltable hand grip according to one or more of the preceding claims, characterized in that the tiltable hand grip (10) has a preferably positively locking stop (40) which is intended for the retaining device (20) and is located preferably on the inside of the grip bracket.

## Revendications

1. Poignée rabattable (10), avec une anse de poignée (12), qui est articulée à pivotement sur une paroi de montage (14), notamment d'un véhicule, au moyen d'un bloc de palier (16) pouvant être monté sur des moyens de fixation (22), et qui peut, à partir d'une position de repos appuyée contre le bloc de palier (16) et contre la force d'un ressort de rappel, être écartée par pivotement dans une position fonctionnelle, un dispositif de maintien (20) étant présent qui, lorsque la poignée rabattable (10) n'est pas montée, maintient l'anse de poignée (12) dans une position de blocage contre l'action du ressort de rappel, de sorte que les moyens de fixation (22) sont accessibles,
**caractérisée** en ce que
- le dispositif de maintien (20) est conçu à déblocage dutomatique pendant le montage,
- le dispositif de maintien (20) est disposé de telle sorte que, pendant le montage, les moyens de fixation (22) agissent directement ou indirectement sur le dispositif de maintien (20), de sorte que le dispositif de maintien (20) accomplit pendant le montage une rotation d'un angle prédéfini (30), et
- le dispositif de maintien (20) présente une saillie (32) qui, lorsque la poignée rabattable n'est pas montée, est en contact avec une saillie (38) formée sur une douille (36) disposée à déplacement dans le perçage (34) pour le moyen de fixation (22), et cette douille (36) est déplacée axialement par le processus de fixation, de sorte que le dispositif de maintien (20) tourne de l'angle prédéfini (30).

2. Poignée rabattable selon la revendication 1, **caractérisée** en ce que le dispositif de maintien (20) est monté à rotation.

3. Poignée rabattable selon la revendication 1 et/ou 2, **caractérisée** en ce que l'axe de rotation (24) du dispositif de maintien (20) est disposé sensiblement parallèlement à l'axe de rotation (26) de l'anse de poignée (12).

4. Poignée rabattable selon une ou plusieurs des revendications précédentes, **caractérisée** en ce que le dispositif de maintien (20) est monté en ajustement serré sur des tourillons.

5. Poignée rabattable selon une ou plusieurs des revendications précédentes, **caractérisée** en ce que le dispositif de maintien (20) est conçu de telle sorte qu'il peut être tourné au moins pour partie par rotation de l'anse de poignée (12), après que le dispositif de maintien ait libéré l'anse de poignée.

6. Poignée rabattable selon la revendication 1, **caractérisée** en ce que les moyens de fixation sont réalisés sous forme de vis (22) et la vis, par son déplacement axial lors du processus de fixation, agit au moins pour partie sur le dispositif de maintien (20), directement, de préférence par la tête de vis, ou indirectement.

7. Poignée rabattable selon une ou plusieurs des revendications précédentes, **caractérisée** en ce que le dispositif de maintien (20) est réalisé sous forme de dispositif de recouvrement pour le perçage récepteur (35) pour le moyen de fixation (22), dispositif qui peut être amené dans sa position de recouvrement à la suite du montage de la poignée rabattable.

8. Poignée rabattable selon une ou plusieurs des revendications précédentes, **caractérisée** en ce que la poignée rabattable (10) présente une butée (40) de préférence à engagement positif pour le dispositif de maintien (20), butée qui se trouve de préférence sur le côté intérieur de la poignée rabattable.
